Europäisches Patentamt

(19) European Patent Office

Office européen des brevets

(11) **EP 0 699 382 A1**

## EUROPEAN PATENT APPLICATION

(12)

(43) Date of publication:
06.03.1996 Bulletin 1996/10

(51) Int. Cl.$^6$: **A01G 15/00**

(21) Application number: 94113581.6

(22) Date of filing: 31.08.1994

(84) Designated Contracting States:
AT BE CH DE DK ES FR GB GR IE IT LI LU MC NL
PT SE

(71) Applicant: **Pokhmelnykh, Lev Alexandrovich**
**Moscow (RU)**

(72) Inventor: **Pokhmelnykh, Lev Alexandrovich**
**Moscow (RU)**

(74) Representative: **Sparing - Röhl - Henseler**
**Patentanwälte**
**Rethelstrasse 123**
**D-40237 Düsseldorf (DE)**

(54) **Method for protecting a territory against cyclones**

(57) A method for protecting a territory against cyclones resides in the following: into the atmosphere over the area to be protected, on the probable path, along which a cyclone travels, a negative electrical space charge is introduced some 1 to 20 days before the expected arrival of the cyclone at the territory to be protected.

## Description

This invention relates to meteorology and, more specifically, to a method for protecting a territory against cyclones and it may be advantageously used to protect territories exposed to the effects of medium-latitude or tropical cyclones, hurricanes included.

Known in the prior art are nature-scale experiments, in the course of which ice-forming reactants were disseminated from aircraft in cloud masses of cyclones, in the hurricane stage to abate the wind (Ref., e.g. Curbing Hurricanes - the chances /Interview with Dr.Robert H.Simpson, Director of the National Hurricane Centre/, "US News and World Report", 1969, 67, No.9, pp.34-36). Measurements made it possible to draw a conclusion on an appreciable decline in the wind velocity during a certain period of time at the cyclone periphery after dissemination of the reactants.

The method used in the above-described experiments suffers from a poor efficiency, since the cyclones thus-treated did not leave the hurricane stage. Complexity, hazards and high cost involved in such cyclone-treating operations constitute other disadvantages of the prior-art method.

It is the object of the present invention to develop such a method for protecting a territory against cyclones, whereby subjecting a cyclone to treatment with electrical charges would permit to change the cyclone condition, to weaken the destructive effect of a cyclone and even to destroy a cyclone or to change the direction of the cyclone movement.

The above-formulated object is accomplished owing to the fact that in a method for protecting a territory against cyclones by acting on the energy of vortex movement of the air, there is proposed an improvement in accordance with the present invention, namely, within the territory to be protected and located on the probable path of an expected cyclone, a space electrical negative charge is introduced into the atmosphere some 1 to 20 days before the expected arrival of the cyclone to the territory to be protected.

The method of the present invention is based on an electrodynamic model describing a cyclonic vortex. In particular, it is based on an assumption, whereby a vortex cyclonic movement is initiated and intensified as a result of a cooperation between the vertical component of a geomagnetic field and the positive space charge of atmospheric air. In accordance with the model in question, the mechanical moment $\underline{M}$ of a cyclone is in direct proportion to the intensity of the vertical component $\underline{B}$ of the geomagnetic field and to the average density of the positive space charge $\underline{q_+}$ of the air.

$$M \sim B_z , q_+ \qquad (I)$$

In accordance with the model in question, a cyclone amplification to reach a hurricane stage takes place as the space positive charge density exceeds a certain critical value. Such critical may be reached in the atmosphere over air strata characterized in a minimal electrical conductivity, in particular in the Earth's low latitudes, over an exchange stratum in oceans, where the absolute air humidity and water saturation of aeroions are at their maximum, while the number of pointed objects on the surface, i.e. the number of sources from which electrical charges flow into the atmosphere, is at its minimum. It follows from the relationship (I) that in order to weaken a cyclonic vortex, it is necessary to lower the positive charge density of atmospheric air.

Making departure from these considerations, the method in accordance with the present invention resides in that an electrical negative charge is introduced into the atmosphere in such a manner that it (i.e. charge) would reach the atmospheric stratum, in which a positive electrical charge is located which is the primary cause of origination and maintaining a cyclonic vortex, and would neutralize this charge. The negative charge in question should be incorporated into a cyclone on the path of its travel before the territory to be protected is reached. Therefore, charge generators are placed along the probable travel path of the cyclone in question. To destroy the cyclone, a negative charge Q is introduced into the atmosphere, this negative charge Q being comparable in terms of its absolute value with the negative charge Q+ of the cyclone. The positive charge value of the cyclone is evaluated from the relationship.

$$Q_+ \approx \pi R^2 H q_+, \qquad (2)$$

wherein     R is the cyclone radius,

H is the height of an air stratum containing a positive electrical charge,

$q_+$ is the average charge density in the cloud medium of a cyclone. The negative charge $Q_-$ introduced into the atmosphere during the period of time T it takes to develop a cyclone until the hurricane stage is determined from the relationship

$$Q_- = T \frac{dQ_-}{dt}, \qquad (3)$$

wherein $dQ_-/dt$ is the velocity (rate) at which a negative charge is introduced into the atmosphere.

In accordance with the method of the present invention, incorporation of an electrical charge into the atmosphere is effected from ground-placed generators operating, for instance, upon the principle of air ionization near the surface of wires or pointed objects as a high electrical potential is applied to them.

Approximate values of the parameters in the Equations (2) and (3) are the following:

R = 50 km is the average radius of a tropical cyclone in its hurricane stage,

$Q_+$ = 0.l Coulomb/km³ is the average charge density in a cloud medium,

H = 1 km is the calculated thickness of an atmospheric stratum containing a positive charge,

T = 20 days is the maximum period of time it takes to develop a cyclonic vortex from its very origination until it reaches its hurricane stage, and

$dQ\_/dt = 2 \times 10^{-3}$ Coulomb/second is the rate (velocity) of generation of a negative charge in the atmosphere by a ground-based charge generator operating upon the principle of forming a corona discharge at the points of wires and conductors.

The method of the present invention offers the following advantages:

- it offers a possibility for complete destruction of a cyclone or for changing the direction of its travel;
- it offers safety for population and servicing personnel, since there is no longer any need to make aircraft flights or to fire rockets into a cyclone; and
- it offers a relative cheapness in organizing protection of a territory against cyclones as compared to the conventionally employed methods, while offering a considerably higher efficiency in its practical implementation.

Specific Embodiment of the Method of the Invention

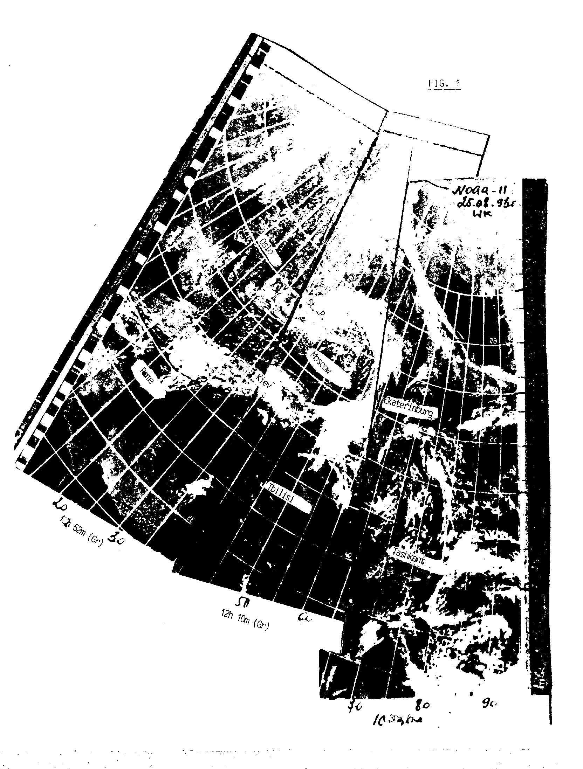

The centre of an extensive medium-latitude cyclone was detected on August 25, 1993 in the area of the city of Saint-Petersbourg, Russia (the cyclone position is shown in Fig.1 representing a photograph taken from outer space). The cyclone was travelling towards the South-East and was expected to arrive on August 27, 1993 at the city of Moscow area.

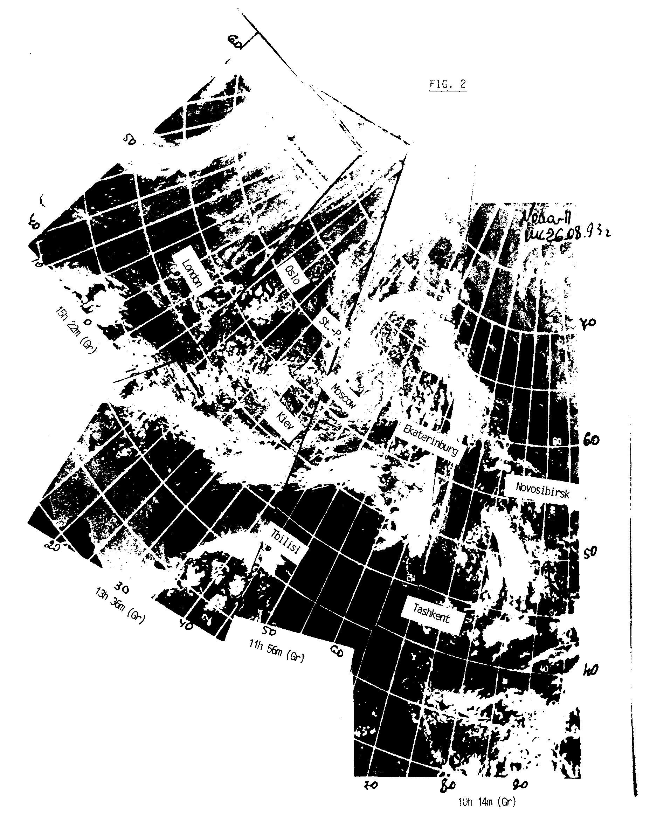

On August 25, 1993, at 7.00 p.m., there was put into service a generator of electrical charges, located at 25 km to the North from the city of Moscow boundary for the purpose to forbid the passage of the cyclone through Moscow. On August 26, 1993, the cyclone centre was disposed at 300 km to the North from Moscow (Fig.2).

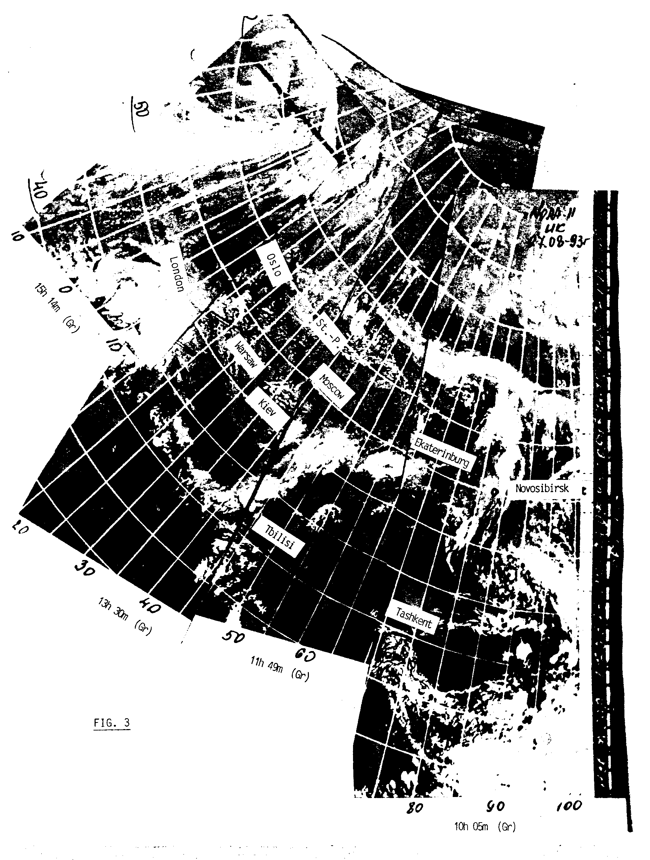

On August 27, 1993, the spiral structure of the cyclone disappeared (Fig.3). All throughout the central region of Russia, Moscow included, a vast area was established featuring good weather with occasional thunderstorms and showers. The air pressure ceased to drop, and the wind grew weaker.

## Claims

1. A method for protecting a territory against cyclones by influencing the energy of the vortex movement of air, **characterized** in that over the territory to be protected, into the atmosphere along the probable path, along which a cyclone travels, a negative electrical space charge is introduced some 1 to 20 days before the expected arrival of the cyclone at the territory to be protected.

2. A method for protecting a territory against cyclones, comprising exerting an action upon the energy of the vortex movement of air by introducing a negative electrical space charge over the territory to be protected, into the atmosphere along the probable path, along which a cyclone travels, some 1 to 20 days before the expected arrival of the cyclone at the territory to be protected.

FIG. 1

FIG. 2

FIG. 3

EP 0 699 382 A1

# DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-3 019 989 (VONNEGUT) <br> * column 1, line 9 - line 16 * <br> * column 4, line 43 - column 6, line 14 * <br> * claim 2 * | 1,2 | A01G15/00 |
| A | DE-A-21 36 554 (HIKADE) <br> * the whole document * | 1,2 | |
| A | US-A-3 284 005 (KASEMIR) <br> * the whole document * | 1,2 | |

TECHNICAL FIELDS SEARCHED (Int.Cl.6)

A01G
E01H

The present search report has been drawn up for all claims

| Place of search | Date of completion of the search | Examiner |
|---|---|---|
| THE HAGUE | 22 December 1994 | Herygers, J |

European Patent Office · EUROPEAN SEARCH REPORT · Application Number EP 94 11 3581

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

7